Europäisches Patentamt

(19) European Patent Office

Office européen des brevets

(11) Publication number: **0 288 995 B1**

# EUROPEAN PATENT SPECIFICATION

(12)

(45) Date of publication of patent specification:
17.04.91 Bulletin 91/16

(51) Int. Cl.$^5$: **B60T 8/34**

(21) Application number: **88106738.3**

(22) Date of filing: **27.04.88**

(54) **Cut-off valve assembly in anti-lock fluid control.**

(30) Priority: **27.04.87 JP 64605/87**

(43) Date of publication of application:
**02.11.88 Bulletin 88/44**

(45) Publication of the grant of the patent:
**17.04.91 Bulletin 91/16**

(84) Designated Contracting States:
**DE FR GB**

(56) References cited:
**DE-A- 2 924 484**
**FR-A- 2 567 826**

(73) Proprietor: **SUMITOMO ELECTRIC INDUSTRIES LIMITED**
**No. 15, Kitahama 5-chome, Higashi-ku Osaka-shi, Osaka 541 (JP)**

(72) Inventor: **Nishikimi, Makoto c/o Itami Works of Sumitomo**
**Electric Industries, Ltd. 1-1, Koyakita 1-chome Itami-shi Hyogo (JP)**
Inventor: **Onishi, Keiichi c/o Itami Works of Sumitomo**
**Electric Industries, Ltd. 1-1, Koyakita 1-chome Itami-shi Hyogo (JP)**

(74) Representative: **Lehn, Werner, Dipl.-Ing. et al**
**Hoffmann, Eitle & Partner Patentanwälte**
**Arabellastrasse 4**
**W-8000 München 81 (DE)**

## Description

## BACKGROUND OF THE INVENTION

(Field of the Invention)

The present invention generally relates to an automotive anti-lock control and, more particularly, to a cut-off valve assembly used in the anti-lock fluid control for shutting off the flow of hydraulic medium between the master cylinder and wheel cylinders during anti-locking operation.

(Description of the Prior Art)

An example of the prior art anti-lock fluid control system is (as disclosed in DE-A1-29 24 484) illustrated in Fig. 4 of the accompanying drawings. According to the illustrated system, a brake fluid circuit extending between a master cylinder MC, linked to a brake pedal, and at least one wheel cylinder WC for applying a braking force to the associated wheel includes a cut-off valve assembly 10 and a pressure responsive piston 1 disposed on one side of the cut-off valve assembly 10 for varying the volume of a portion of the brake fluid circuit on the side of the wheel cylinder WC. A fluid control circuit including a pump 2, an accumulator 3 and solenoid valves 4 and 5 is communicated with a fluid chamber 6 so that the braking pressure to be applied from the wheel cylinder to the associated wheel brake can be adjusted in proportion to the pressure inside the fluid chamber 6.

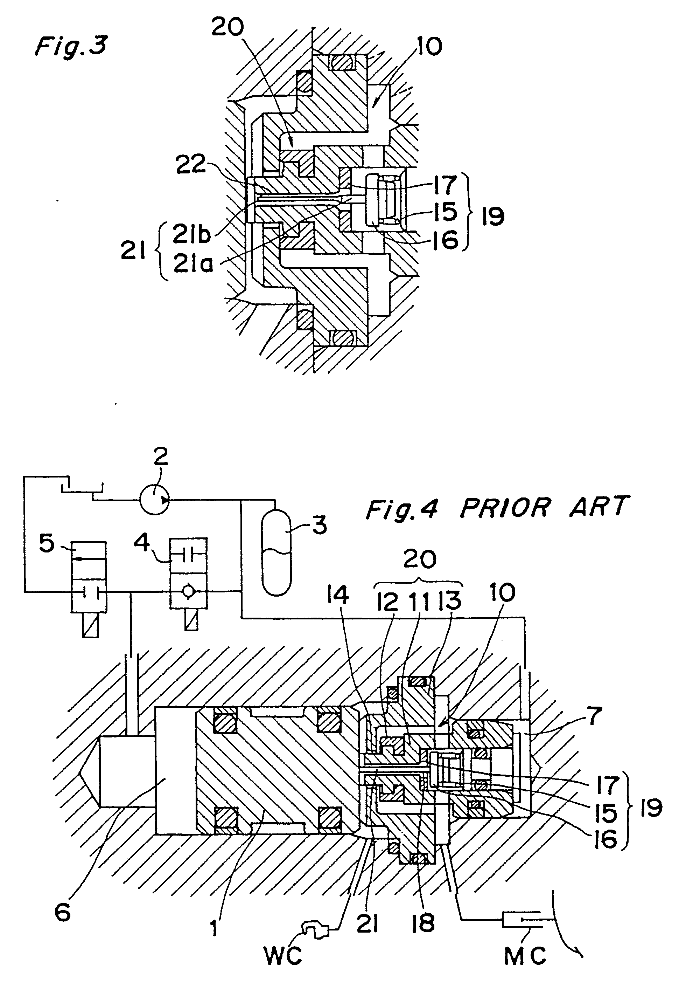

In this arrangement, a high fluid pressure from the fluid control circuit is introduced into a fluid chamber 7 on one side of the cut-off valve assembly 10 remote from the fluid chamber 6. However, because the piston 1 has a greater pressure receiving surface than that of a valving piston 11, the piston 1 urges the valving piston 11 in a direction rightwards, as viewed in Fig. 4, to open an annular passage 14 defined between a sealing valve 12 and a housing 13 during a normal operation in which the internal pressures inside the fluid chambers 6 and 7 are maintained equal approximately to each other. At the same time, the rightward movement of the piston 1 causes a spring 15 to be axially inwardly compressed to separate a valve member 16, accommodated movably within the valving piston 11, away from a valve seat 17, thereby opening a passage 18 then defined between the valve member 16 and the valve seat 17. In this condition as shown, the master cylinder MC and the wheel cylinder WC are therefore communicated with each other through the passages 14 and 18 to permit the flow of the braking fluid from the master cylinder MC to the wheel cylinder WC.

When the automotive vehicle then running is braked with the wheels likely to be locked, a controller (not shown) upon the receipt of a signal generated from wheel speed sensors generates a pressure reducing signal with which the solenoid valves 4 and 5 can be brought into closed and opened positions, respectively. Upon the respective closure and opening of the solenoid valves 4 and 5, the pressure inside the fluid chamber 6 decreases, while the pressure inside the fluid chamber 7 remains the same, to a value lower than the pressure of the braking fluid acting on the right-hand side of the piston 1 and, therefore, the piston 1 is moved leftwards by the braking fluid. At the same time, since a high fluid pressure is acting on the valving piston 11 from behind, a second valve assembly 20 comprised of the valving piston 11, the sealing valve 12 and the housing 13 is closed, followed by the closure of a first valve assembly 19, comprised of the spring 15, the valve member 16 and the valve seat 17, by the action of the spring 15. In this condition, the supply of the braking fluid from the master cylinder MC to the wheel cylinder WC is interrupted. It is to be noted that the continued leftwards movement of the piston 1 causes the volume of that portion of the fluid circuit on the side of the wheel cylinder to expand thereby to reduce the wheel cylinder pressure, resulting in reduction of the braking force.

Where the reduction of the braking force tends to become excessive, the controller generates a pressure increasing signal with which the solenoid valves 4 and 5 are brought into opened and closed positions, respectively. Consequent upon this, a high pressure is applied from the control circuit to the chamber 6, overcoming the force necessary to move the piston 1 leftwards. Therefore, the piston 1 is moved rightwards to permit the increase of the wheel cylinder pressure.

During the anti-lock control, the foregoing cycle of operation is repeated under the command of the controller to cause the wheel cylinder pressure to substantially pulsate so that a proper braking force can be obtained regardless of excessive braking manipulation done by the automobile driver.

It is, however, to be noted that, when the controller generates a hold signal, both of the solenoid valves 4 and 5 are, in response to the hold signal, brought into an closed positions, and therefore, the piston 1 is held in a state of equilibrium with an equal pressure acting on both of the opposite ends thereof, resulting in the wheel cylinder pressure maintained at a predetermined value.

In order to maintain the rate of slippage between the wheel tire and a road surface at an optimum value, the anti-lock control is carried out at a low fluid pressure level where the coefficient of friction between the wheel tire and the road surface is small, but at a high fluid pressure level where the coefficient of friction between the wheel tire and the road surface is great. Accordingly, where the coefficient of friction between the wheel tire and the road surface varies from a small value to a great value depending on change in condition of the road surface during the anti-lock control being performed, the controller will continue generating the pressure increasing signal for a substantial long time. In response to the pressure increasing signal generated from the controller, the piston 1 presses an input shaft of the valve member 16 in a direction rightwards to open the first valve assembly 19 and, then, presses the valving piston 11 in a direction rightwards to open the second valve assembly 20.

It has, however, been found that, if the clearance between the input shaft 21 and the passage in the valving piston 11 is relatively large, the master cylinder pressure abruptly flow into that portion of the fluid circuit on the side of the wheel cylinder simultaneously with the opening of the valve assembly 19, thereby enhancing the tendency of the wheel to be locked.

On the other hand, if the clearance referred to above is made small in order to avoid the above discussed problem, the response to the release of the brake pedal will be adversely affected during the anti-lock control in which the piston 1 is separated from the cut-off valve assembly 10. More specifically, during a period in which the piston 1 is not in position to open the second valve assembly 20 immediately after the release of the brake pedal, only the first valve assembly 19 is opened by the difference between the wheel cylinder pressure and the force exerted by the spring 15 to lower the wheel cylinder pressure, but the small clearance brings about an orifice effect with which the wheel cylinder pressure will not be quickly lowered, with the consequence that the acceleration will be adversely affected because of the braking pressure not quickly lowered.

As hereinbefore discussed, in the prior art cut-off valve assembly wherein the input shaft 21 is of a straight configuration having an uniform diameter over the length thereof, there is two problems incompatible with each other and, therefore, the performance of the anti-lock fluid control system is lowered.

SUMMARY OF THE INVENTION

The present invention has been devised with a view to substantially eliminating the above discussed problems inherent in the prior art cut-off valve assembly used in the anti-lock fluid control system and has for its essential object to provide an improved cut-off valve assembly effective to substantially eliminate the above described problems.

According to the present invention, the cut-off valve assembly comprises a first valve assembly including a valve member, a valve seat and a spring member, said valve member being selectively engageable with and disengageable from the valve seat for selectively closing and opening a fluid circuit between a master cylinder and a wheel cylinder, said spring member normally urging the valve member so as to engage the valve seat. The valve member of the first valve assembly is integral with an input shaft having one end adapted to receive a control fluid pressure and the other end adapted to receive a valve opening force through a pressure responsive piston movable in response to a wheel cylinder pressure. The input shaft axially movably extends through a hole defined in a valve retainer member while leaving a predetermined clearance between the input shaft and the hole to define an annular fluid passage, with one end thereof confronting the pressure responsive piston.

In accordance with the present invention, the input shaft has a step defined therein so as to divide the length of the input shaft into large-diameter and reduced-diameter portions. The large-diameter portion is positioned on one side adjacent the first valve assembly and the reduced-diameter portion is positioned on the other side adjacent the pressure responsive piston. The position of the step on the input shaft is so selected as to be located in the vicinity of the entrance to the fluid passage when valve member being moved in response to the movement of the pressure responsive piston is ready to move towards the opened position.

BRIEF DESCRIPTION OF THE DRAWINGS

This and other objects and features of the present invention will become clear from the following description taken in conjunction with preferred embodiments thereof with reference to the accompanying drawings, in which :

Fig. 1 is a partial longitudinal sectional view of a cut-off valve assembly according to the present invention ;

Figs. 2 and 3 are views similar to Fig. 1, showing the cut-off valve assembly in different operative positions, respectively ; and

Fig. 4 is a partial longitudinal sectional view of the anti-lock fluid control system employing the prior art cut-off valve assembly.

DETAILED DESCRIPTION OF THE EMBODIMENTS

Before the description of the present invention proceeds, it is to be noted that like parts are designated by like reference numerals throughout the accompanying drawings.

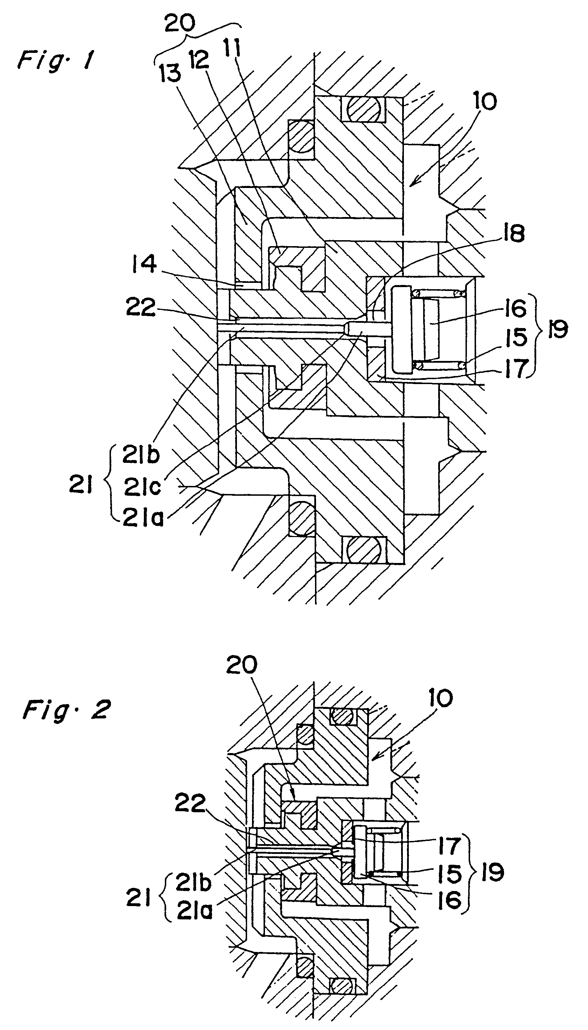

Referring now to Fig. 1, the input shaft 21 integral with the valve member 16 extends through an axial bore, defined in the valving piston 11, with a predetermined clearance left between the input shaft 21 and the bore to provide an annular passage 22. This input shaft 21 has one end opposite to the valve member 16 which protrudes outwardly from the annular passage 22 so as to engage one of the opposite end faces of the piston 1 on which a wheel cylinder pressure acts. Thus, when the piston 1 moves leftwards as viewed in Fig. 1, the input shaft 21 can receive a valve opening force from the piston 1, which valve opening force urges the input shaft 21 to move leftwards in response to the leftwards movement of the piston 1.

As shown, the input shaft 21 according to the present invention is radially stepped at 21c to have a large-diameter end portion 21a and a reduced-diameter end portion 21b which are located close to and remote from the valve member 16, respectively. The position of the step 21c is so selected that, in the condition shown in Fig. 2 in which the valve member 16 has been displaced by the force, transmitted from the piston 1 through the input shaft 21, to open the first valve assembly 19, the step 21c can occupy a position inside the entrance to the annular passage 22 and can come out of the annular passage 22 as the valving member 16 is further moved to open the valve assembly 19 as shown in Fig. 3.

With the cut-off valve assembly so constructed as hereinbefore described, it will readily be seen that, in the event that, as a result of increase of the coefficient of friction between the wheel tire and the road surface during the anti-lock control being performed, the piston 1 acts to open the first valve assembly 19 for the purpose of boosting the wheel cylinder pressure, the large-diameter end portion 21a of the input shaft 21 is positioned inside the annular fluid passage 22 as shown in Fig. 2 while the second valve assembly 20 remains closed, thereby giving an orifice effect by which the abrupt transmission of the master cylinder pressure to the wheel cylinder can be avoided.

Should the brake pedal be released while the piston 1 is separated away from the cut-off valve assembly 10, the valve member 16 having one end face to which the wheel cylinder pressure is applied is moved a relatively great distance rightwards against the spring 15 as shown in Fig. 3, with the consequence that the large-diameter portion 21a of the input shaft 21 is detached out of the annular fluid passage 22 thereby to increase the clearance between the input shaft 21 and the fluid passage 22. Therefore, the wheel cylinder pressure can be quickly lowered, having passed through the first valve assembly 19 smoothly.

Thus, according to the present invention, since the clearance between the input shaft and the annular fluid passage can be adjusted depending on the position of the step in the input shaft relative to the annular fluid passage defined in the valve retainer member, both of the problem associated with the abrupt increase of the wheel cylinder pressure resulting from the increase of the level of the fluid pressure during the anti-lock control, and the problem associated with the failure of the wheel cylinder pressure to respond to the release of the brake pedal which would occur when the pressure responsive piston is separated away from the cut-off valve assembly can be substantially eliminated. Therefore, when the cut-off valve assembly according to the present invention is used in the anti-lock control system, the performance of the anti-lock control system as a whole can be improved to ensure a reliable braking of the automotive vehicle.

Although the present invention has been described in connection with the several preferred embodiments thereof with reference to the accompanying drawings, it is to be noted that various changes and modifications are apparent to those skilled in the art. By way of example, the step on the input shaft is, in the accompanying drawings, shown as exaggerated and is, in practice, minute.

Also, the second valve assembly 20 serves to facilitate a smooth flow of the master cylinder pressure towards the wheel cylinder at an initial stage of braking and, therefore, the use of the second valve assembly 20 is preferred for the purpose of providing a favorable response at the initial stage of braking. However, the concept of the present invention can be equally applicable to the cut-off valve assembly with no second valve assembly used, in which case the first valve assembly is to be fixed in position.

Accordingly, such changes and modifications are to be understood as included within the scope of the present invention as defined by the appended claims.

## Claims

1. A cut-off valve assembly with at least a first valve assembly (19) including a valve member (16), a valve seat (17) and a spring member (15), said valve member (16) being selectively engageable with and disengageable from the valve seat (17) for selectively closing and opening a fluid circuit between a master cylinder (MC) and a wheel cylinder (WC), said spring member (15) normally urging the valve member (16) so as to engage the valve seat (17), said valve member (16) being integrally formed with an input shaft (21) having one end adapted to receive a control fluid pressure and the other end adapted to receive a valve opening force through a pressure responsive piston (1) movable in response to a wheel cylinder pressure, said input shaft (21) extending axially movably through a bore defined in a valve retainer member (11) while leaving a predetermined clearance between the input shaft and the bore to define an annular fluid passage (22), with one end thereof confronting the pressure responsive piston (1), characterized in that the input shaft (21) has a step (21c) defined therein so as to divide the length of the input shaft (21) into large-diameter (21a) and reduced-diameter (21b) portions, said large-diameter portion (21a) being positioned on one side adjacent the first valve assembly (19) and the reduced-diameter portion (21b) being positioned on the other side adjacent the pressure responsive piston (1), said step (21c) being so positioned as to be located in the vicinity of the entrance to the fluid passage (22) when valve member (16) being moved in response to the movement of the pressure responsive piston (1) is ready to move towards the opened position.

## Ansprüche

1. Absperrventilanordnung mit zumindest einer ersten Ventileinrichtung (19), umfassend ein Ventilelement (16), einen Ventilsitz (17) und ein Federelement (15), wobei das Ventilelement (16) selektiv in Eingriff mit und außer Eingriff von dem Ventilsitz (17) bringbar ist zum selektiven Schließen und Öffnen eines Fluidkreislaufs zwischen einem Hauptzylinder (MC) und einem Radzylinder (WC), wobei für den Eingriff mit dem Ventilsitz (17) das Federelement (15) normalerweise gegen das Ventilelement (16) drückt, und das Ventilelement (16) mit einer Eingangswelle (21) integral ausgebildet ist, deren eines Ende einen Steuerungsfluiddruck aufnehmen kann und deren anderes Ende durch einen aufgrund eines Radzylinderdrucks bewegbaren Druckansprechkolben (1) eine Ventilöffnungskraft aufnehmen kann, wobei die Eingangswelle (21) axial bewegbar durch eine in einem Ventilhalteelement (11) ausgebildete Bohrung verläuft, während ein vorbestimmter Freiraum zwischen der Eingangswelle und der Bohrung belassen wird, um einen ringförmigen Fluiddurchgang (22) zu bilden, dessen eines Ende dem Druckansprechkolben (1) gegenüberliegt, dadurch **gekennzeichnet**, daß die Eingangswelle (21) eine darin ausgebildete Stufe (21c) aufweist, welche die Länge der Eingangswelle (21) in Abschnitte großen Durchmessers (21a) und verminderten Durchmessers (21b) teilt, wobei der Abschnitt großen Durchmessers (21a) an einer Seite neben der ersten Ventileinrichtung (19) und der Abschnitt (21b) verminderten Durchmessers an der anderen Seite neben dem Druckansprechkolben (1) angeordnet sind, und wobei die Stufe (21c) derart angeordnet ist, daß sie sich in der Nähe des Einlasses zu dem Fluiddurchgang (22) befindet, wenn das Ventilelement (16), das aufgrund der Bewegung des Druckansprechkolbens (1) bewegt wurde, zum Bewegen in Richtung auf die offene Stellung bereit ist.

## Revendications

1. Ensemble à soupape d'arrêt ayant au moins un premier ensemble à soupape (19) qui comporte un obturateur (16), un siège (17) et un organe formant ressort (15), l'obturateur (16) pouvant sélectivement coopérer avec le siège (17) afin qu'il assure la fermeture et l'ouverture sélectives d'un circuit de fluide formé entre un maître-cylindre (MC) et un cylindre de roue (WC), l'organe formant ressort (15) repoussant normalement l'obturateur (16) afin qu'il soit au contact du siège (17), l'obturateur (16) étant solidaire d'un arbre d'entrée (21) dont une première extrémité est destinée à subir la pression du fluide de commande et dont l'autre extrémité est destinée à subir une force d'ouverture de soupape transmise par l'intermédiaire d'un piston (1) sensible à la pression et mobile en fonction de la pression du cylindre de roue, l'arbre d'entrée (21) étant disposé afin qu'il puisse se déplacer axialement dans un trou délimité dans un organe (11) de retenue de soupape, tout en laissant un espace prédéterminé entre l'arbre d'entrée et le trou de manière qu'un passage annulaire (22) de circulation de fluide soit délimité, une première extrémité du passage étant tournée vers le piston (1) sensible à la pression, caractérisé en ce que l'arbre d'entrée (21) a un gradin (21c) délimité afin qu'il divise la longueur de l'arbre d'entrée (21) en une partie de grand diamètre (21a) et une partie de diamètre réduit (21b), la partie de grand diamètre (21a) étant placée d'un premier côté près du premier ensemble à soupape (19) et la partie de diamètre réduit (21b) étant placée de l'autre côté près du piston (1) sensible à la pression, le gradin (21c) étant disposé afin qu'il soit au voisinage de l'entrée du passage de fluide (22) lorsque l'obturateur (16), déplacé à la suite du déplacement du piston (1) sensible à la pression, est prêt à se déplacer vers la position d'ouverture.

Fig. 1

Fig. 2

6

*Fig.3*

*Fig.4 PRIOR ART*